# EUROPEAN PATENT SPECIFICATION

(11) **EP 4 021 255 B1**
(45) Date of publication and mention of the grant of the patent: **07.10.2026**
(21) Application number: 20816308.9
(22) Date of filing: 04.11.2020
(51) Int. Cl.: A47J 31/44

(54) **APPARATUS FOR MAKING A BEVERAGE USING A CAPSULE CONTAINING A FOOD SUBSTANCE**
VORRICHTUNG ZUR ZUBEREITUNG EINES GETRÄNKS UNTER VERWENDUNG EINER KAPSEL, EINE LEBENSMITTELSUBSTANZ ENTHALTEND
APPAREIL POUR LA PRÉPARATION D'UNE BOISSON UTILISANT UNE CAPSULE CONTENANT UNE SUBSTANCE ALIMENTAIRE

(30) Priority: 05.11.2019 IT 201900020400
(43) Date of publication of application: 06.07.2022
(73) Proprietor: Caffitaly System S.P.A., 40041 Gaggio Montano (BO) (IT)
(72) Inventor: TONELLI, Stefano, 40041 Gaggio Montano BO (IT); CASTELLI, Cristiano, 40046 Alto Reno Terme BO (IT)
(74) Representative: Marchi, Paolo
(86) International application number: PCT/IB2020/060341
(87) International publication number: WO 2021/090186

(56) References cited:
- US-A1- 2017 055 557
- US-A1- 2019 142 212

## Description

The present invention generally relates to the beverage-making sector. Specifically, the present invention relates to an apparatus for making a beverage by infusion of a food substance with water, wherein the food substance is contained in a capsule (in particular, a disposable capsule) through which the flow of water passes during the making of the beverage. Apparatuses of this type are already known in general.

Furthermore, in the sector, apparatuses are already known that are capable of recognising the type of capsule inserted in the apparatus and, based on the type of capsule recognised, adopting the infusion and dispensing parameters (such as temperature, pressure and quantity of water fed into the capsule) best suited to the type of capsule. Such apparatuses comprise a recognition device that is capable of reading a bar-code or a QR-code or another recognisable code shown on the capsule.

The invention described herein relates to a type of apparatuses that use capsules in which a capsule identification element is positioned inside the capsule (for example, just below the lid of the capsule) instead of outside the capsule. An example of capsules usable in an apparatus according to this type is described in international patent application No. WO 2017/195170 A1: inside the capsule there is an element marked with a recognition substance which is optically active. The reading of this recognition substance takes place after the lid of the capsule is pierced.

An apparatus for making a beverage using a capsule comprising an optical recognition system intended to recognise an identification element positioned inside the capsule is also known from US2019/142212A1 and US2017/055557A1.

The positioning of the identification element inside the capsule has the advantage that said identification element is not subject to scraping, deterioration or tampering before the use of the capsule, since it is protected by the outer casing of the capsule itself and is not accessible without breaking or puncturing the capsule. This enables the recognition device to read an identification element that is certainly intact.

However, the inventors of the present invention understood that, in some cases, difficulties or errors could be encountered in the reading phase, thus leading to false positives and/or false negatives.

For example, there is the risk that the recognition device could mistakenly read the outer face of the lid of the capsule instead of the identification element inside the capsule. This would cause a failed recognition of the capsule.

There is also the risk that, if the lid of the capsule has optical characteristics similar to one of the recognisable identification elements, the recognition device could read the lid and recognise the capsule differently than what is required by the inner identification element. Indeed, the capsule could be recognised even if it has no inner identification element.

For example, if the recognisable characteristic of the identification element is the colour and for this purpose a range of colours has been provided for the different types to be recognised, then a coloured lid with a colour similar to one in the range could be mistakenly read as if it were the identification element.

In this context, the technical purpose underlying the present invention is to provide an apparatus for making a beverage that allows to overcome, or at least reduce, said drawbacks or that offers an alternative solution to the currently known apparatuses.

The technical purpose and the aims indicated are substantially achieved by an apparatus for making a beverage in accordance with claim 1. Particular embodiments of the present invention are defined in the corresponding dependent claims.

One aspect underlying the present invention is that of detecting when the members forming the infusion chamber reach a position in which the capsule is pierced. This enables to check the optical recognition system in such a way that the reading to be used for recognition can be carried out after the piercing position has been reached. Therefore, the reading valid for the recognition is carried out after the piercer has entered the capsule, with the certainty that the optical reader (a reading head thereof is associated with the piercer) sees the identification element inside the capsule, not the lid. The present invention is therefore useful for avoiding read errors by the optical recognition system in apparatuses for capsules with an inner identification element.

Further features and the advantages of the present invention will become more apparent from the detailed description of an exemplary, non-limiting embodiment of an apparatus for making a beverage. Reference shall be made to the accompanying drawings, in which:

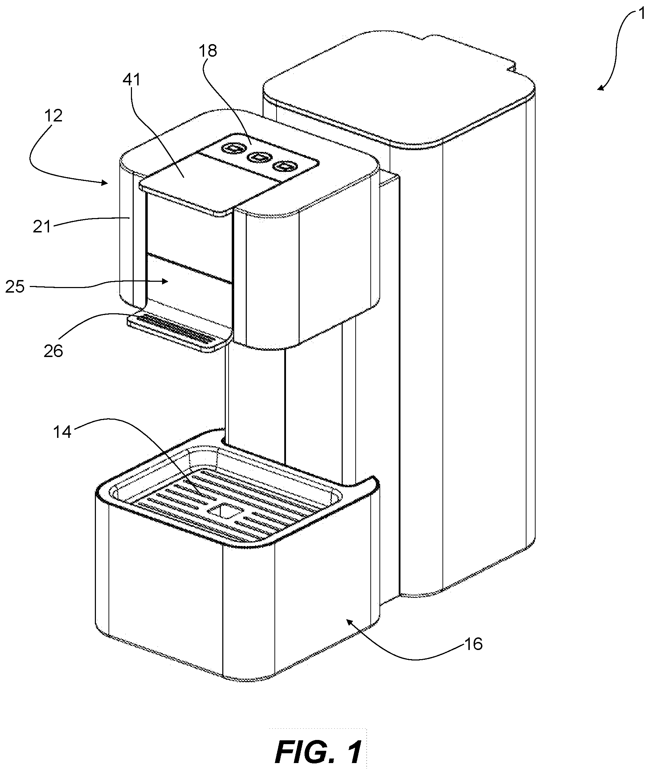

- Figure 1 shows a perspective view of an apparatus for making a beverage to which the present invention can be applied;
- Figure 2 shows a perspective view of an infusion unit being part of the apparatus in Figure 1;
- Figure 3 shows a perspective view of the infusion unit in Figure 2, wherein the capsule-holding body is shown in its removed condition;
- Figure 4 shows, in a simplified way, a partially cross-sectioned capsule, with an identification element inside, and a piercer with optical reader;
- Figure 5 shows a front view of a variant, according to the present invention, of the infusion unit in Figure 2 in a first position corresponding to an open condition of the infusion chamber;
- Figure 6 shows a close-up view of a detail of the front view in Figure 5;
- Figure 7 shows a first sectional view of the infusion unit in the first position in Figure 5, sectioned along a section line VII-VII;
- Figure 8 shows a close-up view of a detail in Figure 7;
- Figure 9 shows a second sectional view of the infusion unit in the first position in Figure 5, sectioned along a section line IX-IX;
- Figure 10 shows a third sectional view of the infusion unit in the first position in Figure 5, sectioned along a section line X-X;
- Figure 11 shows a close-up view of a detail of a sectional view according to the section line XI-XI in Figure 7;
- Figure 12 shows the infusion unit in Figure 5 in a second position corresponding to a start of the closing motion of the infusion chamber, in the first sectional view corresponding to Figure 7;
- Figure 13 shows a close-up view of a detail of a sectional view according to the section line XIII-XIII in Figure 12;
- Figure 14 shows the infusion unit in Figure 5 in a third position corresponding to a piercing position, in the first sectional view corresponding to Figure 7;
- Figure 15 shows the second sectional view, corresponding to Figure 9, of the infusion unit in the third position;
- Figure 16 shows the third sectional view, corresponding to Figure 10, of the infusion unit in the third position;
- Figure 17 shows a close-up view of a detail, corresponding to the view in Figure 6, of the infusion unit in the third position;
- Figure 18 shows a close-up view of a detail in Figure 14;
- Figure 19 shows a close-up view of a detail of a sectional view according to the section line XIX-XIX in Figure 14;
- Figure 20 shows the infusion unit in Figure 5 in a fourth position corresponding to a closed condition of the infusion chamber, in the first sectional view corresponding to Figure 7;
- Figure 21 shows the second sectional view, corresponding to Figure 9, of the infusion unit in the fourth position;
- Figure 22 shows the third sectional view, corresponding to Figure 10, of the infusion unit in the fourth position;
- Figure 23 shows a close-up view of a detail in Figure 20;
- Figure 24 shows a close-up view of a detail in Figure 21;
- Figure 25 shows a close-up view of a detail of a sectional view according to the section line XXV-XXV in Figure 20.

Referring to the drawings mentioned, an apparatus for making a beverage is indicated by the reference number 1. In the apparatus 1, the beverage is made using a capsule containing a food substance: a flow of water passes through the capsule and infuses the food substance. In the context of the present invention, the term "capsule" also means a cartridge, a pod or other similar item, generally disposable, comprising a pierceable casing that encloses a food substance. Specifically, the food substance is coffee powder and, by infusion with hot water, the beverage obtained is coffee, for example espresso coffee. Said aspects are already known per se to those skilled in the art.

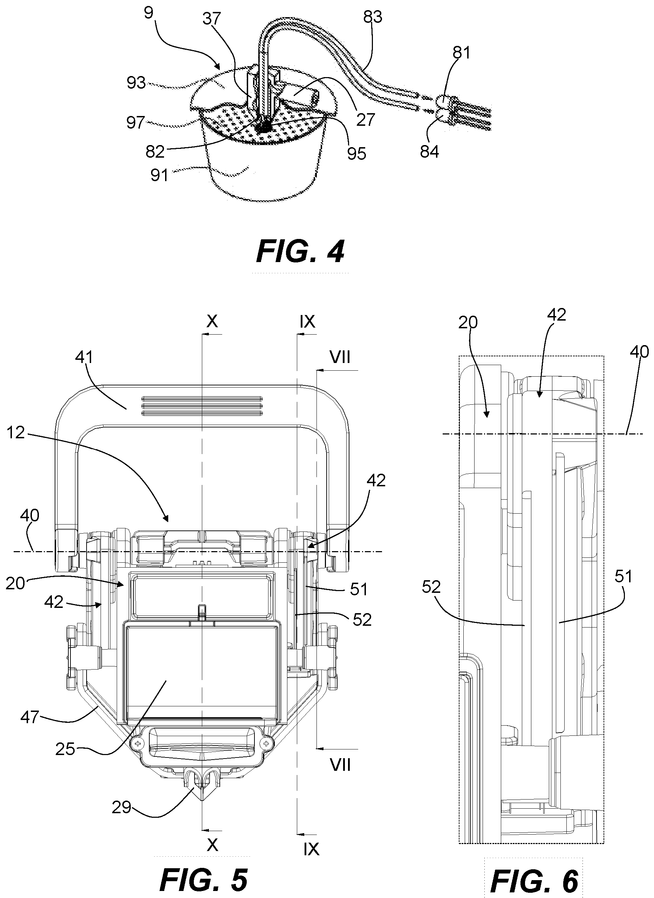

An example of a capsule that can be used in an apparatus according to the present invention is shown in Figure 4, where it is indicated by the reference number 9. The capsule 9 comprises a cup-shaped body 91, which defines an inner volume containing the food substance, and a lid 93 of flexible film that closes the body 91. An identification element 95 (visible in Figure 4 because the lid 93 is presented as interrupted to show the interior) is positioned inside the capsule 9 and is intended to be read by an optical recognition system being part of the apparatus 1 in order to recognise the type of capsule 9 and adopt the infusion and dispensing parameters (such as temperature, pressure and quantity of water fed into the capsule) best suited to the type of capsule.

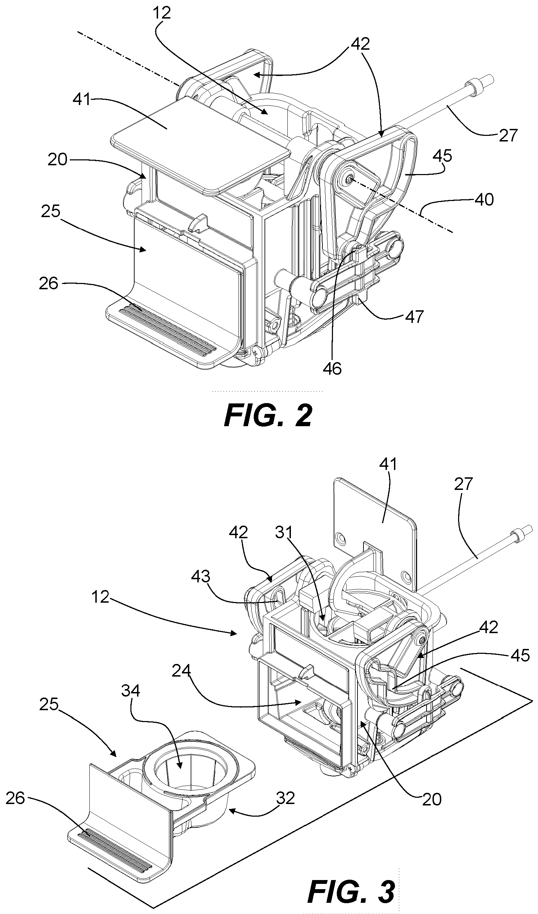

For example, the identification element 95 is applied to or is part of a porous element of the capsule 9, such as an upper filter 97. In the embodiment illustrated, the identification element 95 is facing the lid 93 and is visible after the lid 93 is pierced. More generally, the identification element 95 is positioned in such a way that it can be read by the optical recognition system after a specific region of the body or of the lid of the capsule 9 is pierced. The identification element 95 can be a bar-code or a QR-code or another recognisable code, for example a specific colour. In particular, the identification element 95 is made with a particular substance (such as a fluorescent substance) that has a specific optical response to a stimulus by an optical signal. In this regard, reference is made to the international patent application No. WO 2017/195170 A1 and in particular to the embodiments described and shown in Figures 3A to 4 of said international application. Optionally, the upper filter 97 can be made of a material pigmented with said particular substance or in general with a coloured pigment, so that the entire upper filter 97 is an identification element.

The apparatus 1 comprises a machine body 10 that supports an infusion unit 12, that is to say a beverage-making unit. Below the infusion unit 12 there is a supporting grate 14 that is intended to receive a cup so that the beverage made by the infusion unit 12 falls into the cup. The supporting grate 14 is a lid of an underlying tray 16 for collecting drops that may fall from the infusion unit 12 if the cup is absent.

The apparatus 1 comprises a water tank; the machine body 10 encloses a heater to heat the water and a pump to pressurise the water.

The apparatus 1 comprises a keypad 18 through which a user can start making the beverage and possibly choose a type of product (for example, long coffee or ristretto). The keypad 18 is connected to a control unit that manages the operation of the heater and of the pump, also based on the information obtained from the optical recognition system and the instructions received through the keypad 18.

The infusion unit 12 is fixed to the machine body 10 and is connected, through a duct 27, to the heater and to the pump in the machine body 10 to receive pressurised hot water to be used for the infusion.

The infusion unit 12 comprises a supporting structure 20 and a box-like casing 21 that encloses and protects the supporting structure 20 of the infusion unit 12 and the inner components of the latter. In an alternative embodiment, the box-like casing 21 can be a shell also having the function of a supporting structure.

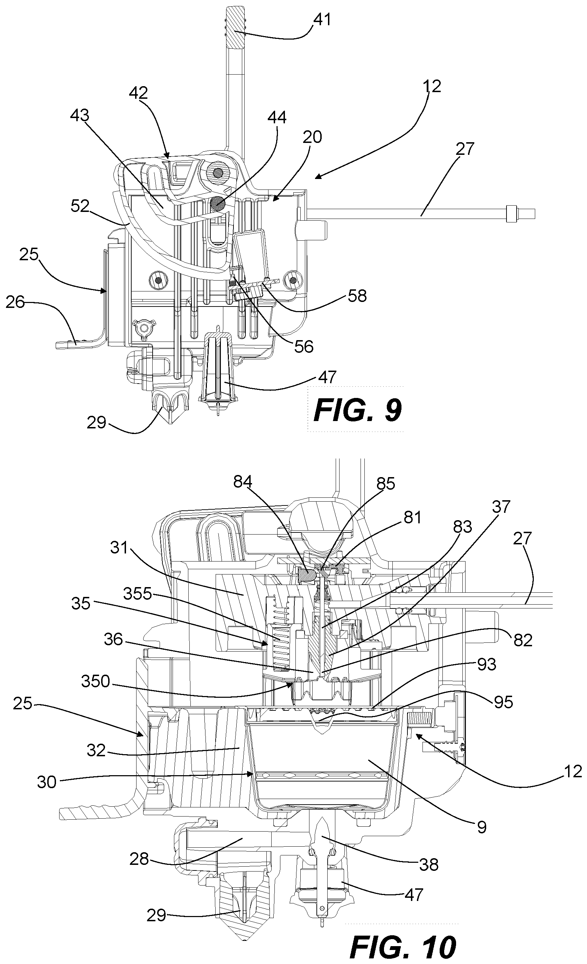

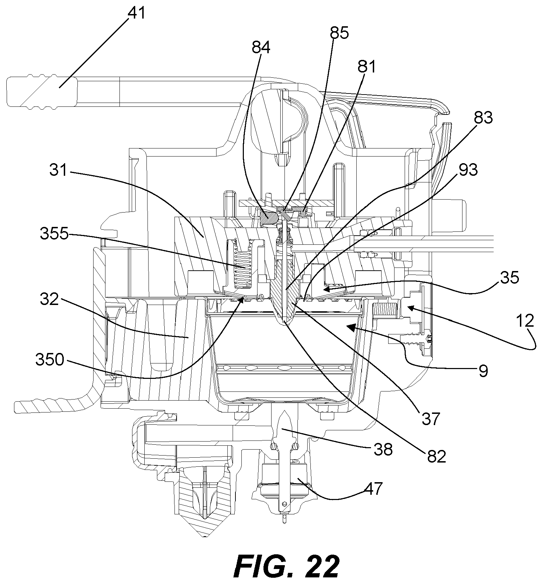

The infusion unit 12 comprises a first member 31 and a second member 32 that define an infusion chamber 30 intended to receive the capsule 9. The first member 31 and the second member 32 are movable relative to each other between a home position, in which they are at a distance from each other (see Figure 10, for example), and an infusion position, in which they are coupled to each other and close the infusion chamber 30 (see Figure 22, for example). In the home position, the infusion chamber 30 is open and the user can act to remove an already used capsule or to position a new capsule. In the infusion position, the first member 31 is in pressing contact with the second member 32 on an annular region that surrounds the infusion chamber 30, thus providing a sealed closing of the infusion chamber 30 itself.

The apparatus 1 further comprises a motive mechanism (described in greater detail below) for moving the first member 31 and the second member 32 from the home position to the infusion position, and vice versa.

In particular, at least one out of the first member 31 and the second member 32 is a movable member that is movable relative to the supporting structure 20 for making said motion between the home position and the infusion position, and vice versa.

Specifically, the second member 32 includes a substantially glass-shaped seat 34 to receive the capsule 9, whereas the first member 31 acts as a closing lid for the seat 34. In the embodiment illustrated, the second member 32 is part of a capsule-holding body 25 that is removably mounted in a housing 24 made in the box-like casing 21. In practice, the capsule-holding body 25 is shaped like a removable drawer. This also includes a projecting grip 26 that can be grasped by a user to remove or insert the capsule-holding body from/into the housing 24.

The first member 31 is slidably mounted on the supporting structure 20 and, for example, comprises grooves that are slidably received in guide ribs made in the supporting structure 20. The sliding motion of the first member 31, when the capsule-holding body 25 is inserted in the housing 24, corresponds to said motion between the home position and the infusion position.

In the embodiment illustrated, the first member 31 is located above the second member 32, the infusion unit 12 is of the vertical type (in which the water is introduced into the capsule from the top and the beverage comes out of the capsule from the bottom), and the first member 31 is slidable along a vertical line. However, these aspects are not necessary for the present invention, which can be applied to other types of apparatus, for example of the horizontal type, without a removable capsule-holding body, with opposite water flow.

The infusion unit 12 comprises at least one first piercer 37 that is associated with the first member 31 and that, in use, is intended to make a piercing in a first region of the capsule 9, in particular in the lid 93, to make an opening for water infeed. A duct 27 is intended to inject water into the capsule 9 through the piercing made by the first piercer 37. The first piercer 37 in turn has a channel for the water to pass.

The infusion unit 12 comprises at least one second piercer 38 that, in use, is intended to pierce a second region of the capsule 9 to make an opening for beverage outfeed from the capsule, in particular on a bottom of the body 91 of the capsule 9. A beverage outfeed duct 28 puts the piercing made by the second piercer 38 in communication with a dispensing spout 29.

In practice, the piercers 37, 38 are associated with a hydraulic circuit of the apparatus 1 and are intended to pierce opposite regions of the capsule. In use, the piercing made by each piercer 37, 38 in the respective region of the capsule is an opening for water infeed into the capsule or an opening for beverage outfeed from the capsule.

In the particular embodiment illustrated, the second piercer 38 is movable relative to the infusion chamber 30 between an active position, in which the second piercer 38 projects at least partially into the infusion chamber 30 and, in use, pierces the capsule, and an inactive position in which the second piercer 38 is moved away from the infusion chamber 30 relative to the active position. For example, the motion of the second piercer 38 is actuated by the motive mechanism that moves the members 31, 32 relative to each other.

Said motive mechanism can be made in numerous ways and is not limiting for the present invention. The accompanying figures make reference to a motive mechanism that is described in detail in international patent application No. WO 2018/109574 A1.

Since the motive mechanism shown is only an example, it will be dealt with briefly below. Please refer to the international patent application No. WO 2018/109574 A1 (in addition to the international patent application No. WO 2017/195170 A1) for further details and for all aspects not explicitly described here.

In short, the motive mechanism comprises a handle or lever 41 pivoted to the supporting structure 20 on an axis of rotation 40. To close or open the infusion chamber 30, a user operates the lever 41 by making it rotate about said axis of rotation 40. The lever 41 is rotationally connected to at least one rotatable member 42 that, through the interaction between cam-type guiding profiles and respective followers, determines the motion of the first member 31 of the infusion unit 12 and the motion of the second piercer 38. In particular, two rotatable members 42 are arranged on opposite sides of the supporting structure 20 and the lever 41 rotates jointly with the two rotatable members 42, which therefore rotate about the same axis of rotation 40.

In the embodiment illustrated, each rotatable member 42 is a cam-holding body that extends transversely relative to the axis of rotation 40 and has a substantially circular-sector shape that is perpendicular to the axis of rotation 40.

A first cam-type guiding profile 43 is made on the cam-holding body 42, in particular on a first face thereof that is facing the first member 31 of the infusion unit 12. The first cam-type guiding profile 43 is engaged by a first follower 44 (for example a tooth, a pin or a roller) that is connected to the first member 31 of the infusion unit 12.

A second cam-type guiding profile 45 is made on the cam-holding body 42, in particular on a second face thereof opposite the first face, and is engaged by a second follower 46 (for example a tooth, a pin or a roller) that is connected to a support 47 of the second piercer 38.

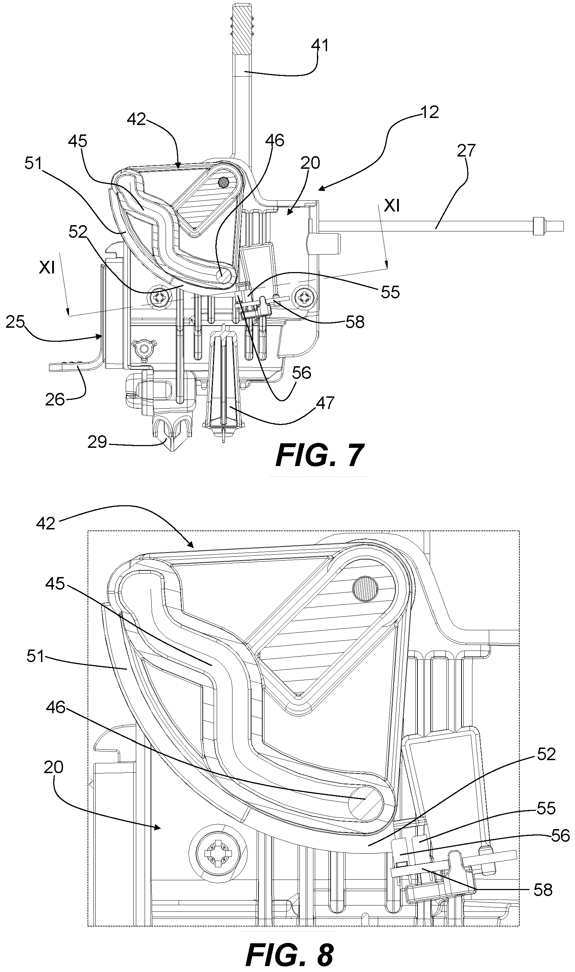

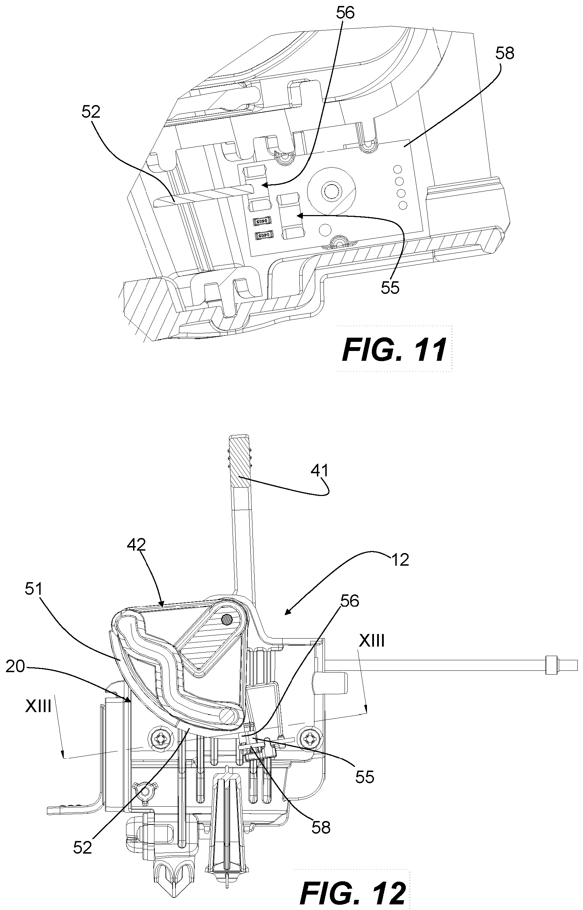

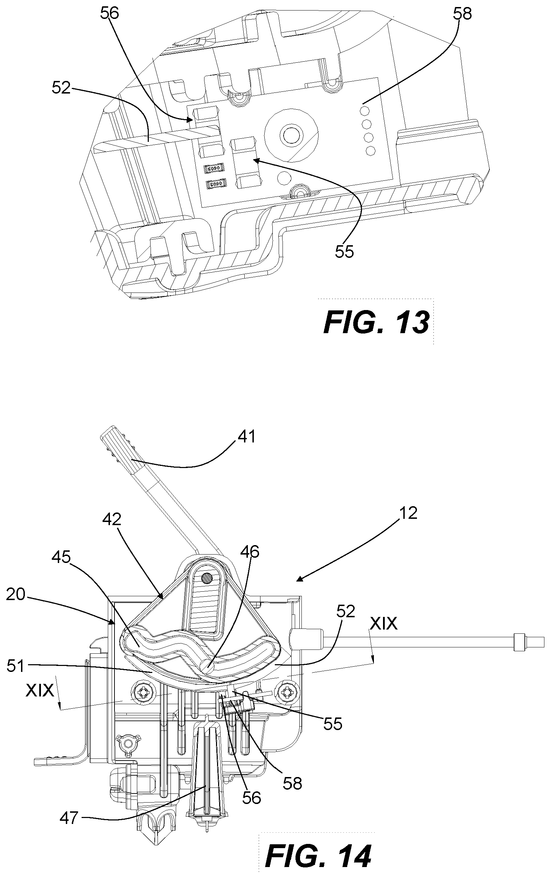

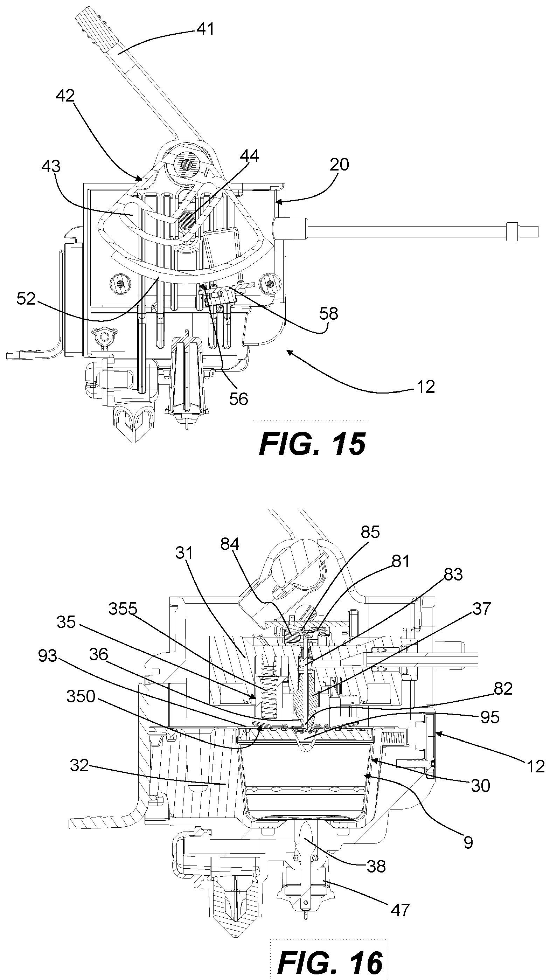

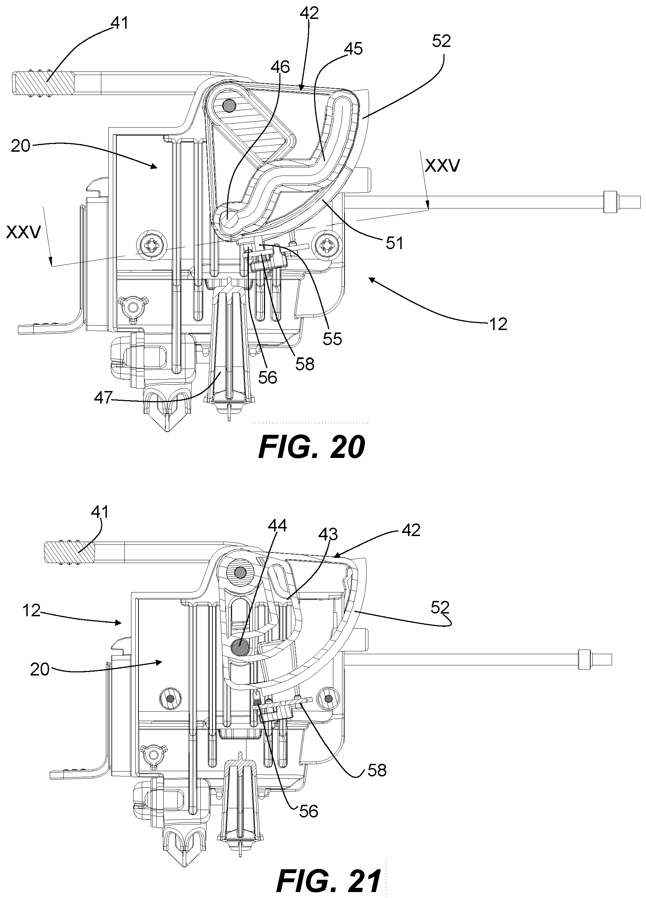

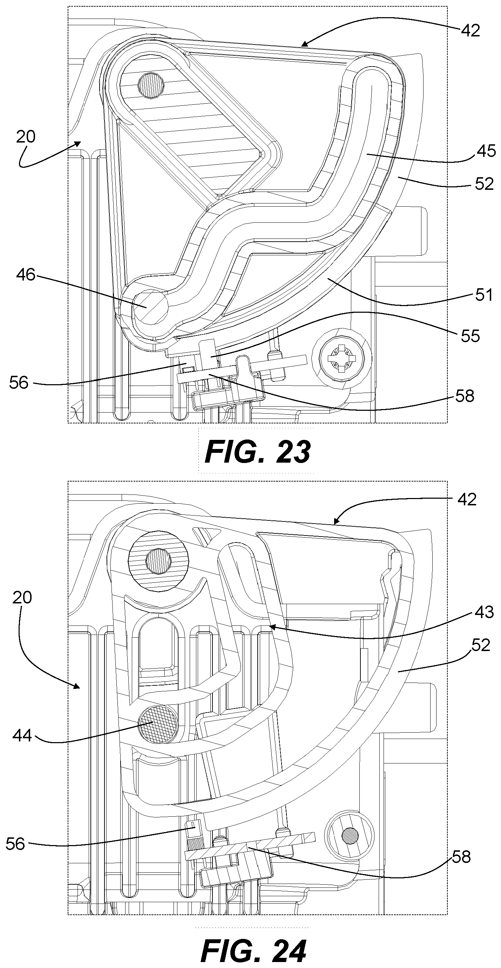

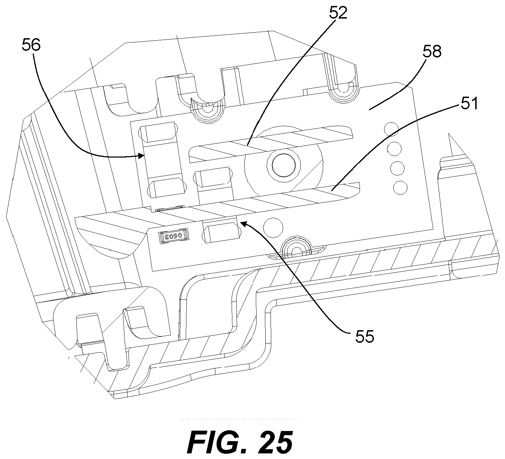

Beyond the details (described in WO 2018/109574 A1, as mentioned), a relevant aspect for the present invention is that a respective relative position of the first member 31 and of the second member 32 of the infusion unit 12 corresponds to each angular position of the lever 41 (and of the cam-holding bodies 42 rotating therewith): in Figures 5 to 11, the lever 41 is vertical and the members 31, 32 are in the home position; in Figures 12 and 13, the lever 41 has been slightly rotated and the first member 31 has started to move towards the second member 32; in Figures 14 to 19, the lever 41 is rotated to an intermediate position and the first member 31 has come into contact with the capsule 9; in Figures 20 to 25, the lever 41 is horizontal and the members 31, 32 are in the infusion position.

As already mentioned, the apparatus 1 comprises an optical capsule recognition system, which in use is intended to recognise the identification element 95 inside the capsule 9. The optical recognition system comprises an optical reader 81 that has a reading head 82 intended to enter the capsule 9 for reading the identification element 95. For example, the reading head 82 is the end of an optical fibre 83, at the opposite end of which there is a sensor that acts as an optical reader 81.

The optical recognition system can also comprise a light emitter 84, for example an LED, which illuminates the identification element 95 through the same optical fibre 83 or a second optical fibre. For example, Figure 4 schematically shows an optical recognition system with two optical fibres, both having one end that enters the capsule 9, while Figure 10 shows an optical recognition system with a single optical fibre and a semi-transparent mirror 85 (for details, see WO 2017/195170 A1).

The optical recognition system also comprises, or is connected to, an electronic processing unit that receives the reading signal from the optical reader 81 and processes it to perform the recognition of the identification element 95 of the capsule.

The reading head 82 is associated with a piercer and is intended to enter the capsule through the piercing made by the piercer itself in a region of the capsule.

In the embodiment shown in the figures, the optical fibre 83 is mounted in an internal channel of the first piercer 37, nevertheless leaving space for the infusion water to pass. The reading head 82 is associated with the first piercer 37 and enters the capsule together with it, when the first piercer 37 pierces the lid 93.

In an alternative, the reading head 82 itself is a piercer and makes a piercing in the capsule, in particular in the lid 93; for example, the optical fibre 83 has a pointed or bladed end. In another alternative, the optical fibre 83 is mounted on a piercer that is different from the first piercer 37 that makes the opening for the infusion water. In yet another alternative, the optical fibre 83 is mounted on a piercer that makes the opening for beverage outfeed.

In the various alternatives, the piercer for the reading head 82 is associated with a member of the infusion unit that is movable relative to the capsule 9 during the closing of the infusion chamber 30. In the embodiment illustrated, for example, the piercer (which specifically is the first piercer 37) is associated with the first member 31.

Since the piercer is initially far from the region of the capsule 9 to be pierced, the piercer makes the piercing during the relative motion of the two members 31, 32 at a piercing position (shown in Figures 14 to 19) that is placed between the home position and the infusion position. In the embodiment illustrated, the piercing position corresponds to a specific angular position of the lever 41 and of the cam-holding bodies 42.

An aspect underlying the present invention is that of combining the reading performed by the optical reader 81 with information on the piercing position being reached.

For this purpose, the apparatus 1 comprises a detection system, capable of detecting the piercing position having been reached. The optical recognition system is operatively connected to the detection system and is configured to perform the recognition of the capsule 9 based on a reading performed by the optical reader 81 after the piercing position has been reached.

For example, the operational connection consists in the fact that the electronic processing unit, in addition to receiving a reading signal from the optical reader 81, receives a signal from the detection system that relates to whether or not the piercing position has been reached.

This helps ensure that the signal read and used for the recognition actually corresponds to the identification element 95 and not to other elements such as the capsule lid or something thereupon. Therefore, the present invention avoids errors in the optical recognition system caused by an undesired reading of something other than the identification element 95.

For the purposes of the present invention, the piercing position, i.e. that to be taken into consideration for the reading for the capsule recognition, can correspond to a penetration of the first piercer 37 into the lid 93 for about 0.5 - 1 mm, for example.

In the embodiment illustrated, a capsule-pressing element 35 is associated with the first member 31 of the infusion unit 12 and has a pressing surface 350 intended to come into contact with the region to be pierced of the capsule 9 before the piercing position has been reached. The capsule-pressing element 35 has a body in which it is obtained a seat 36 which houses the first piercer 37. The capsule-pressing element 35 is movable relative to the first piercer 37 between a first condition in which the first piercer 37 is withdrawn within the seat 36 (see Figure 10, for example) and a second condition in which the piercer projects from said pressing surface 350 (see Figure 22, for example). Basically, the capsule-pressing element 35 is slidable relative to the first member 31.

A spring or other elastic element 355 pushes the capsule-pressing element 35 towards the first condition, whereas the capsule-pressing element 35 is pushed towards the second condition by a force due to contact with the region of the capsule, when the capsule-pressing element 35 presses upon it.

In practice, as the members 31, 32 move to close the infusion chamber 30, the capsule-pressing element 35 is initially in the first condition and then comes into contact with the lid 93 of the capsule 9. Met with the resistance of the lid 93 of the capsule, the capsule-pressing element 35 cannot advance freely with the first member 31 and moves towards the second condition. In this way, the tip of the first piercer 37 arrives flush with the pressing surface 350 at approximately the piercing position and, projecting then from the pressing surface 350, pierces the lid 93.

The capsule-pressing element 35 is useful for ensuring that the perforation of the lid 93 occurs at the piercing position regardless of any swelling of the lid 93 (made of flexible film), which could vary from capsule to capsule. Indeed, any swelling is squeezed by the capsule-pressing element 35, which therefore enables the piercing height of the lid 93 to be uniform, thus ensuring that the information received by the detection system is correct.

In apparatus variants in which the infusion unit is of the horizontal type, the capsule-pressing element 35 can also be useful for facilitating the expulsion of the capsule 9 after dispensing.

In one mode of use, the optical reader 81 is off when the infusion chamber is fully open (i.e. in the home position) and is activated when the motion to close the infusion chamber begins. Therefore, the electronic processing unit can receive signals from the optical reader 81 throughout the motion of the members 31, 32 of the infusion unit 12, but only the signals received after reaching the piercing position are taken into consideration for the recognition of the capsule 9. The optical reader 81 can be turned off immediately after receiving a valid reading, or when the infusion chamber is in closed condition.

Optionally, one or more readings of the optical reader 81 performed before reaching the piercing position can be compared with the reading after piercing, which is to say the reading for the recognition.

For example, this comparison can be used to diagnose the proper operation of the optical reader.

For example, the optical recognition system can be configured to recognise a reading as valid for the recognition only if the difference in the signal relative to the reading before piercing exceeds a predetermined threshold, which is to say if the reading for the recognition is clearly different from the reading before piercing.

For example, the expected luminous intensity values of the signal detected by the optical reader 81 are: a value lower than 150 where the capsule is absent; a value between 300 and 400 for a reading of the lid 93 of the capsule; a value greater than 1000 for a reading of the identification element 95. Said values relate to a numerical reference value and, therefore, are not expressed in a unit of measurement. Therefore, based on the deviation of the signal from the expected values, the electronic processing unit can detect any anomalies.

As regards the detection system, in particular it is a position detection system and, in the embodiment illustrated, comprises a first indicator element 51 that is movable relative to the supporting structure 20 in coordination with a movable member of the infusion chamber, so that the position of the first indicator element 51 indicates the position of the movable member itself.

The detection system further comprises a first detector 55 that is capable of sensing the position of the first indicator element 51. Therefore, based on the position of the first indicator element 51, the first detector 55 can detect when the piercing position has been reached. Preferably, the first detector 55 is fixed relative to the supporting structure 20.

In the embodiment illustrated the first indicator element 51 is located on the cam-holding body of one of the rotatable members 42 (in particular, it is made in one piece with the latter), so it is rotationally connected with the rotatable member 42 and its motion is an angular displacement. Consequently, its angular position relative to the axis of rotation 40 is in one-to-one correspondence with the position of the first member 31 (with which the piercer 37 associated with the optical reader 81 is associated) of the infusion unit 12.

The first indicator element 51 is a projecting lip (in particular, projecting radially from the rotatable member 42) that develops along an arc of circumference relative to the axis of rotation 40. A projecting lip can also be understood to mean a tooth, a blade, a profile or another element having a similar effect in the operation of the present invention.

The first detector 55, which is positioned in proximity to the rotatable member 42, is an optical sensor (for example, a photocell). The first indicator element 51 is movable within a visual field of such optical sensor. In particular, the piercing position corresponds to the first indicator element 51 entering or exiting the visual field of the optical sensor of the first detector 55.

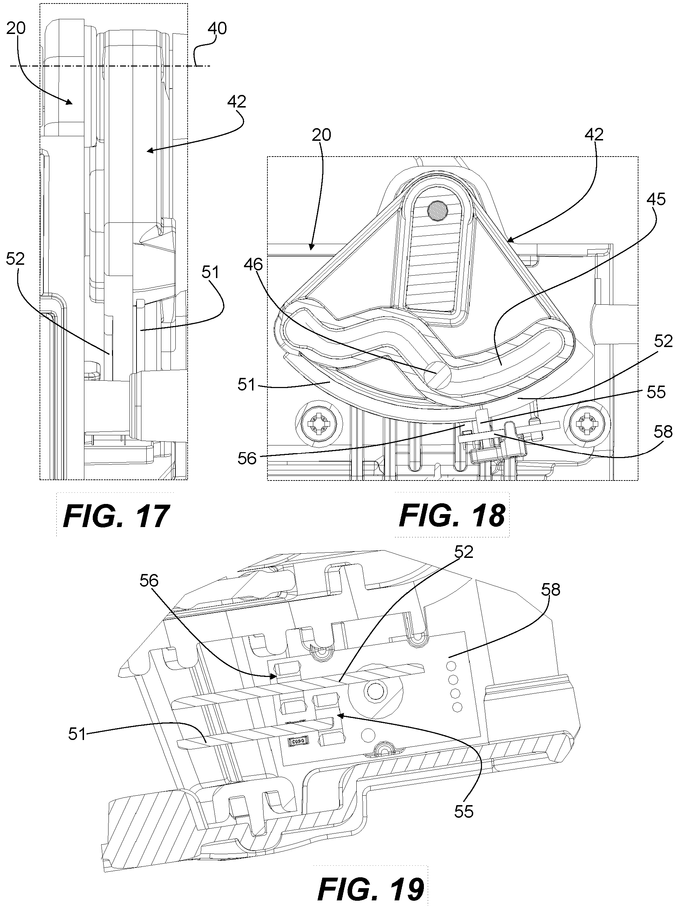

For this purpose, the position and angular extension of the first indicator element 51 are suitably chosen. As can be seen in the figures, the first indicator element 51 has an angular extension that is much smaller than the angular extension of the rotatable member 42. In the home position and at the beginning of the motion (Figures 5 to 13), the first indicator element 51 is still far from the first detector 55. In the piercing position (Figures 14 to 19), the first indicator element 51 is entering the first detector 55 (see close-up of Figure 19), activating a corresponding signal that the piercing position has been reached. The first indicator element 51 is entering the visual field of the first detector 55 and remains in the visual field of the first detector 55 even in closed position (Figures 20 to 25).

This embodiment of the detection system is useful because it is a simple and precise system. Furthermore, compared to a micro-switch for example, an optical sensor is useful because it is precise, quick in response, not bulky and not much subject to wear.

The detection system can also be capable of detecting an initial motion from the home position and/or of detecting the reaching of the infusion position, in which the infusion chamber is closed.

In order to detect these other positions of interest, the detection system further comprises a second detector 56 and a second indicator element 52 that indicates the position of the movable member 31. The second detector 56, which is preferably fixed relative to the supporting structure 20, is capable of sensing the position of the second indicator element 52 and, based on the position of the latter, can detect the beginning of a motion from the home position and/or the reaching of the infusion position.

In the embodiment shown, the second detector 56 is also an optical sensor (for example, a photocell), having a visual field in which the second indicator element 52 is movable.

The second indicator element 52 is similar overall to the first indicator element 51: it is located on the cam-holding body of one of the rotatable members 42 (in particular, it is made in one piece with the latter), it is a projecting lip (in particular, projecting radially from the rotatable member 42) that develops along an arc of circumference, its motion is an angular displacement and its angular position relative to the axis of rotation 40 is in one-to-one correspondence with the position of the first member 31 of the infusion chamber.

Basically, the main differences between the two indicator elements 51, 52 are their position and their angular extension. For the second indicator element 52, these are chosen in such a way that the initial motion from the home position corresponds to the second indicator element (52) entering the visual field of the second optical sensor 56 and/or in such a way that the infusion position being reached corresponds to the second indicator element 52 exiting the visual field of the second optical sensor 56.

For example, in the home position shown in Figures 5 to 11, the second indicator element 52 is not in the visual field of the second detector 56, whereas after an initial motion of the lever 41 the second indicator element 52 has entered the second detector 56 (Figures 12 and 13). Following this initial motion, the second detector 56 produces a signal that activates the optical reader 81.

The second indicator element 52 remains in the second detector 56 during the subsequent motion (for example, in the piercing position in Figures 14 to 19) and exits it when the infusion position is reached (Figures 20 to 25), thus allowing the second detector 56 to produce a signal indicating that the infusion of the food substance into the capsule 9 can begin.

In the embodiment illustrated, the first indicator element 51 and the second indicator element 52 are located on the same rotatable member 42 and are substantially parallel to each other, axially spaced. The first detector 55 and the second detector 56 are correspondingly positioned next to each other and are mounted on a same base 58 fixed to the supporting structure 20. The detection system can be made in a different way than what is described and represented here. For example, it can use micro-switches, distance sensors or other expedients that enable the identification, during the closure of the infusion chamber, of the position in which the optical reader sees the inside of the capsule rather than the external surface of the capsule. Furthermore, the present invention could be applied to an automatic machine in which there is no manual lever for closing the infusion chamber. All details can be replaced by other technically equivalent details and the materials used, as well as the shapes and the dimensions of the various components, may be any according to requirements.

## Claims

1. An apparatus (1) for making a beverage using a capsule (9) containing a food substance, comprising:
- an infusion unit (12) comprising a first member (31) and a second member (32) that define an infusion chamber (30) intended to receive the capsule (9), the first member (31) and second member (32) being movable relative to each other between a home position, in which they are at a distance from each other, and an infusion position, in which they are coupled to each other and close the infusion chamber (30), the infusion unit (12) also comprising a supporting structure (20);
- at least one piercer (37) that is associated to the first member (31) of the infusion unit (12) and that, in use, is intended to make a piercing in a region (93) of the capsule (9) during the relative motion of the first member (31) and the second member (32) from the home position towards the infusion position, at a piercing position that is placed between the home position and the infusion position;
- an optical capsule recognition system, which, in use, is intended to recognise an identification element (95) that is positioned inside the capsule (9), the optical recognition system comprising an optical reader (81) that has a reading head (82) associated to the piercer (37) and intended to enter the capsule (9) through the piercing made in said region (93) of the capsule (9); wherein at least one of the first member (31) and the second member (32) of the infusion unit (12) is a movable member that is movable relative to the supporting structure (20) so as to make said motion between the home position and the infusion position;
**characterised in that**
the apparatus (1) comprises a detection system that comprises: an indicator element (51) that is movable relative to the supporting structure (20) in coordination with the movable member (31) of the infusion unit (12); and a detector (55) that is capable of sensing the position of the indicator element (51),
the position of the indicator element (51) indicating the position of the movable member (31), and the detector (55) being capable of detecting the piercing position having been reached based on the position of the indicator element (51), whereby the detection system is capable of detecting the piercing position having been reached; and
**in that** the optical recognition system is operatively connected to the detection system and is configured to perform the recognition based on a reading performed by the optical reader (81) after the piercing position has been reached.

2. The apparatus (1) according to claim 1, wherein the detector (55) is an optical sensor and the indicator element is movable within a visual field of the optical sensor.

3. The apparatus (1) according to claim 2, wherein the piercing position corresponds to the indicator element (51) entering or exiting the visual field of the optical sensor.

4. The apparatus (1) according to claim 2 or 3, comprising a rotatable member (42) pivoted to the supporting structure (20) and being part of a motive mechanism for moving the first member (31) and the second member (32) from the home position to the infusion position, and vice versa,
wherein the indicator element (51) is a projecting lip that develops angularly along an arc of circumference and is rotationally connected with the rotatable member (42), the movement of the indicator element (51) being an angular movement.

5. The apparatus (1) according to any of claims 1 to 4, wherein the detection system is further capable of detecting an initial motion from the home position and/or of detecting the infusion position having been reached.

6. The apparatus (1) according to any of claims 1 to 4, wherein said detector (55) is a first detector and said indicator element (51) is a first indicator element,
wherein the detection system comprises a second indicator element (52) that is movable relative to the supporting structure (20) in coordination with the movable member (31) of the infusion unit (12), the position of the second indicator element (52) indicating the position of the movable member (31), the detection system further comprising a second detector (56) that is capable of sensing the position of the second indicator element (52) and that, based on the position of the second indicator element (52), is capable of detecting an initial motion from the home position and/or of detecting the infusion position having been reached.

7. The apparatus (1) according to claim 4, wherein said detector (55) is a first detector, said indicator element (51) is a first indicator element and said optical sensor is a first optical sensor,
wherein the detection system comprises a second indicator element (52) that is movable relative to the supporting structure (20) in coordination with the movable member (31) of the infusion unit (12), the position of the second indicator element (52) indicating the position of the movable member (31), the detection system further comprising a second detector (56) that is capable of sensing the position of the second indicator element (52) and that, based on the position of the second indicator element (52), is capable of detecting an initial motion from the home position and/or of detecting the infusion position having been reached,
wherein the second detector (56) is a second optical sensor and the second indicator element (52) is movable within a visual field of the second optical sensor,
the second indicator element (52) being a projecting lip that develops angularly along an arc of circumference and is rotationally connected with the rotatable member (42), the movement of the second indicator element (52) being an angular movement,
wherein the initial motion from the home position corresponds to the second indicator element (52) entering or exiting the visual field of the second optical sensor
and/or
wherein the infusion position being reached corresponds to the second indicator element (52) exiting or entering the visual field of the second optical sensor.

8. The apparatus (1) according to any of claims 1 to 7, comprising a capsule-pressing element (35) that is associated to the first member (31) of the infusion unit (12),
the capsule-pressing element (35) having a seat (36), in which the piercer (37) is housed, and a pressing surface (350) intended to come into contact with said region (93) of the capsule (9) before reaching the piercing position,
the capsule-pressing element (35) being movable relative to the piercer (37) between a first condition in which the piercer (37) is withdrawn within the seat (36) and a second condition in which the piercer (37) projects from said pressing surface (350),
wherein the capsule-pressing element (35) is elastically pushed towards the first condition and wherein the capsule-pressing element (35) is pushed towards the second condition by a contact force with said region (93) of the capsule (9).

9. The apparatus (1) according to any of claims 1 to 8, wherein said piercer (37) is associated to a hydraulic circuit of the apparatus (1) and, in use, the piercing made by the piercer (37) in the said region (93) of the capsule (9) is an opening for water infeed into the capsule or for beverage outfeed from the capsule.

10. A method for recognising a capsule (9) in an apparatus (1) according to any of claims 1 to 9, comprising the following steps:
- moving the first member (31) and the second member (32) from the home position towards the infusion position;
- during the motion, detecting when the piercing position has been reached;
- after the piercing position has been reached, performing a reading by the optical reader (81);
- performing the capsule recognition based on the reading performed.

11. The recognition method according to claim 10, wherein the optical reader (81) is activated before reaching the piercing position and wherein a reading performed before reaching the piercing position is compared with the reading for recognition.

## Patentansprüche

1. Eine Vorrichtung (1) zur Zubereitung eines Getränks unter Verwendung einer Kapsel (9), eine Lebensmittelsubstanz enthaltend, Folgendes beinhaltend:
- eine Aufgusseinheit (12), die dabei ein erstes Glied (31) und ein zweites Glied (32) beinhaltet, die eine Aufgusskammer (32) definieren, die dazu vorgesehen ist, die Kapsel (9) zu empfangen, das erste Glied (31) und das zweite Glied (32) sind dabei im Verhältnis zueinander zwischen einer Grundstellung, in der sie sich in einem Abstand voneinander befinden, und einer Aufgussstellung, in der sie miteinander verbunden sind und die Aufgusskammer (30) schließen, beweglich, die Aufgusseinheit (12) beinhaltet dabei auch eine Trägerstruktur (20);
- mindestens einen Lochdorn (37), der mit dem ersten Glied (31) der Aufgusseinheit (12) verknüpft ist und der dazu vorgesehen ist, im Gebrauch während der jeweiligen Bewegung des ersten Glieds (31) und des zweiten Glieds (32) von der Grundstellung in die Aufgussstellung an einer Durchbohrungsstelle, die sich zwischen der Grundstellung und der Aufgussstellung befindet, eine Durchbohrung in einem Bereich (93) der Kapsel (9) vorzunehmen;
- ein optisches Kapselerkennungssystem, das dazu vorgesehen ist, im Gebrauch ein Kennelement (95), das in der Kapsel (9) platziert ist, zu erkennen, das optische Erkennungssystem beinhaltet dabei ein optisches Lesegerät (81), das einen Lesekopf (82) hat, der mit dem Lochdorn (37) verknüpft und dazu vorgesehen ist, durch die Durchbohrung, die in besagtem Bereich (93) der Kapsel (9) vorgenommen wurde, in die Kapsel (9) einzudringen;
wobei mindestens eines der beiden Elemente, das erste Glied (31) und das zweite Glied (32) der Aufgusseinheit (12), ein bewegliches Glied ist, das im Verhältnis zur Trägerstruktur (20) beweglich ist, um besagte Bewegung zwischen der Grundstellung und der Aufgussstellung auszuführen;
**dadurch gekennzeichnet, dass**
die Vorrichtung (1) ein Erfassungssystem beinhaltet, das Folgendes beinhaltet: ein Anzeigeelement (51), das koordiniert mit dem beweglichen Glied (31) der Aufgusseinheit (12) im Verhältnis zur Trägerstruktur (20) beweglich ist; und einen Detektor (55), der dazu imstande ist, die Position des Anzeigeelements (51) zu fühlen,
die Position des Anzeigeelements (51) gibt dabei die Position des beweglichen Glieds (31) an, und der Detektor (55) ist dabei dazu imstande, auf der Grundlage der Position des Anzeigeelements (51) zu erfassen, ob die Durchbohrungsposition erreicht ist, wodurch das Erfassungssystem dazu imstande ist, zu erfassen, wann die Durchbohrungsposition erreicht ist; und dadurch, dass das optische Erkennungssystem operativ mit dem Erfassungssystem verbunden ist und dazu ausgelegt ist, die Erkennung auf der Grundlage einer Ablesung, die vom optischen Lesegerät (81) durchgeführt wird, nachdem die Durchbohrungsposition erreicht ist, durchzuführen.

2. Die Vorrichtung (1) nach dem Patentanspruch 1, wobei der Detektor (55) ein optischer Sensor ist und das Anzeigeelement innerhalb eines Sichtbereichs des optischen Sensors beweglich ist.

3. Die Vorrichtung (1) nach dem Patentanspruch 2, wobei die Durchbohrungsposition dem Eintreten in den Sichtbereich des optischen Sensors durch das Anzeigeelement (51) oder dessen Austreten daraus entspricht.

4. Die Vorrichtung (1) nach dem Patentanspruch 2 oder 3, ein drehbares Glied (42) beinhaltend, das drehbar an der Trägerstruktur (20) gelagert ist und das dabei Teil eines Bewegungsmechanismus' zur Bewegung des ersten Glieds (31) und des zweiten Glieds (32) aus der Grundstellung in die Aufgussstellung und umgekehrt ist,
wobei das Anzeigeelement (51) eine vorstehende Lippe ist, die sich winkelig entlang eines Kreisbogens erstreckt und drehend mit dem drehbaren Glied (42) verbunden ist, die Bewegung des Anzeigeelements (51) ist dabei eine Winkelbewegung.

5. Die Vorrichtung (1) nach jedem der Patentansprüche 1 bis 4, wobei das Erfassungssystem weiter dazu imstande ist, eine Anfangsbewegung aus der Grundstellung zu erfassen und/oder das Erreichen der Aufgussposition zu erfassen.

6. Die Vorrichtung (1) nach jedem der Patentansprüche 1 bis 4, wobei besagter Detektor (55) ein erster Detektor ist und besagtes Anzeigeelement (51) ein erstes Anzeigeelement ist,
wobei das Erfassungssystem ein zweites Anzeigeelement (52) beinhaltet, das im Verhältnis zur Trägerstruktur (20) koordiniert mit dem beweglichen Glied (31) der Aufgusseinheit (12) beweglich ist, die Position des zweiten Anzeigeelements (52) gibt dabei die Position des beweglichen Glieds (31) an, das Erfassungssystem beinhaltet dabei weiter einen zweiten Detektor (56), der dazu imstande ist, die Position des zweiten Anzeigeelements (52) zu fühlen und der auf der Grundlage der Position des zweiten Anzeigeelements (52) dazu imstande ist, eine Anfangsbewegung aus der Grundstellung zu erfassen und/oder zu erfassen, dass die Aufgussstellung erreicht ist.

7. Die Vorrichtung (1) nach dem Patentanspruch 4, wobei besagter Detektor (55) ein erster Detektor ist, besagtes Anzeigeelement (51) ein erstes Anzeigeelement ist und besagter optischer Sensor ein erster optischer Sensor ist,
wobei das Erfassungssystem ein zweites Anzeigeelement (52) beinhaltet, das im Verhältnis zur Trägerstruktur (20) koordiniert mit dem beweglichen Glied (31) der Aufgusseinheit (12) beweglich ist, die Position des zweiten Anzeigeelements (52) gibt dabei die Position des beweglichen Glieds (31) an, das Erfassungssystem beinhaltet dabei weiter einen zweiten Detektor (56), der dazu imstande ist, die Position des zweiten Anzeigeelements (52) zu fühlen und der auf der Grundlage der Position des zweiten Anzeigeelements (52) dazu imstande ist, eine Anfangsbewegung aus der Grundstellung zu erfassen und/oder zu erfassen, dass die Aufgussstellung erreicht ist,
wobei der zweite Detektor (56) ein zweiter optischer Sensor ist und das zweite Anzeigeelement (52) innerhalb eines Sichtbereichs des zweiten optischen Sensors beweglich ist,
das zweite Anzeigeelement (52) ist dabei eine vorstehende Lippe, die sich winkelig entlang eines Kreisbogens erstreckt und drehend mit dem drehbaren Glied (42) verbunden ist, die Bewegung des zweiten Anzeigeelements (52) ist dabei eine Winkelbewegung,
wobei die Anfangsbewegung aus der Grundstellung dem Eintreten des zweiten Anzeigeelements (52) in den Sichtbereich des zweiten optischen Sensors oder dessen Austreten daraus entspricht
und/oder
wobei das Erreichen der Aufgussstellung dem Austreten des zweiten Anzeigeelements (52) aus dem Sichtbereich des zweiten optischen Sensors oder dessen Eintreten darin entspricht.

8. Die Vorrichtung (1) nach jedem der Patentansprüche 1 bis 7, ein Kapselpresselement (35) beinhaltend, das mit dem ersten Glied (31) der Aufgusseinheit (12) verknüpft ist,
das Kapselpresselement (35) hat dabei einen Sitz (36), in dem der Lochdorn (37) untergebracht ist, und eine Pressfläche (350), die dazu vorgesehen ist, mit besagtem Bereich (93) der Kapsel (9) in Berührung zu treten, bevor die Durchbohrungsposition erreicht ist,
das Kapselpresselement (35) ist dabei im Verhältnis zum Lochdorn (37) zwischen einem ersten Zustand, in dem der Lochdorn (37) im Sitz (36) eingezogen ist, und einem zweiten Zustand, in dem der Lochdorn (37) aus besagter Pressfläche (350) herausragt, beweglich,
wobei das Kapselpresselement (35) elastisch in Richtung des ersten Zustands gedrückt wird und wobei das Kapselpresselement (35) durch eine Kraft des Kontakts mit besagtem Bereich (93) der Kapsel (9) in Richtung des zweiten Zustands gedrückt wird.

9. Die Vorrichtung (1) nach jedem der Patentansprüche 1 bis 8, wobei besagter Lochdorn (37) mit einem Hydraulikkreislauf der Vorrichtung (1) verknüpft ist, und die Durchbohrung, die der Lochdorn (37) in dem besagten Bereich (93) der Kapsel (9) durchführt, im Gebrauch eine Öffnung zum Einfüllen von Wasser in die Kapsel oder zum Ablassen des Getränks aus der Kapsel ist.

10. Ein Verfahren zur Erkennung einer Kapsel (9) in einer Vorrichtung (1) nach jedem der Patentansprüche 1 bis 9, folgende Schritte beinhaltend:
- Bewegung des ersten Glieds (31) und des zweiten Glieds (32) aus der Grundstellung in Richtung der Aufgussstellung;
- während der Bewegung Erfassung, ob die Durchbohrungsposition erreicht ist;
- nachdem die Durchbohrungsposition erreicht ist, Durchführung einer Ablesung durch das optische Lesegerät (81);
- Durchführung der Kapselerkennung auf der Grundlage der durchgeführten Ablesung.

11. Das Erkennungsverfahren nach dem Patentanspruch 10, wobei das optische Lesegerät (81) aktiviert wird, bevor die Durchbohrungsposition erreicht ist, und wobei eine Ablesung, die durchgeführt wird, bevor die Durchbohrungsposition erreicht ist, mit der Ablesung zur Erkennung verglichen wird.

## Revendications

1. Un appareil (1) pour la préparation d'une boisson utilisant une capsule (9) contenant une substance alimentaire, comprenant :
- un groupe d'infusion (12) comprenant un premier organe (31) et un deuxième organe (32) qui définissent une chambre d'infusion (30) destinée à recevoir la capsule (9), le premier organe (31) et le deuxième organe (32) étant mobiles l'un par rapport à l'autre entre une position de repos, dans laquelle ils sont espacés l'un de l'autre, et une position d'infusion, dans laquelle ils sont accouplés l'un avec l'autre et ferment la chambre d'infusion (30), le groupe d'infusion (12) comprenant également une structure de support (20) ;
- au moins un perforateur (37) qui est associé au premier organe (31) du groupe d'infusion (12) et qui, lors de l'utilisation, est destiné à pratiquer une perforation dans une région (93) de la capsule (9) pendant le mouvement relatif du premier organe (31) et du deuxième organe (32) de la position de repos vers la position d'infusion, au niveau d'une position de perforation qui est située entre la position de repos et la position d'infusion ;
- un système de reconnaissance optique de la capsule, qui, lors de l'utilisation, est destiné à reconnaître un élément d'identification (95) qui est positionné à l'intérieur de la capsule (9), le système de reconnaissance optique comprenant un lecteur optique (81) qui a une tête de lecture (82) associée au perforateur (37) et destinée à pénétrer dans la capsule (9) à travers la perforation pratiquée dans ladite région (93) de la capsule (9) ; dans lequel au moins l'un entre le premier organe (31) et le deuxième organe (32) du groupe d'infusion (12) est un organe mobile qui est mobile par rapport à la structure de support (20) de manière à réaliser ledit mouvement entre la position de repos et la position d'infusion ;
**caractérisé en ce que**
l'appareil (1) comprend un système de détection qui comprend : un élément indicateur (51) qui est mobile par rapport à la structure de support (20) de manière coordonnée avec l'organe mobile (31) du groupe d'infusion (12) ; et un détecteur (55) qui est capable de capter la position de l'élément indicateur (51),
la position de l'élément indicateur (51) indiquant la position de l'organe mobile (31), et le détecteur (55) étant capable de détecter la position de perforation qui a été atteinte sur la base de la position de l'élément indicateur (51), ce par quoi le système de détection est capable de détecter la position de perforation ayant été atteinte ; et
**en ce que** le système de reconnaissance optique est opérationnellement relié au système de détection et est configuré pour effectuer la reconnaissance sur la base d'une lecture effectuée par le lecteur optique (81) une fois que la position de perforation a été atteinte.

2. L'appareil (1) selon la revendication 1, dans lequel le détecteur (55) est un capteur optique et l'élément indicateur est mobile dans un champ visuel du capteur optique.

3. L'appareil (1) selon la revendication 2, dans lequel la position de perforation correspond à l'élément indicateur (51) entrant dans le, ou sortant du champ visuel du capteur optique.

4. L'appareil (1) selon la revendication 2 ou 3, comprenant un organe rotatif (42) monté sur pivot à la structure de support (20) et faisant partie d'un mécanisme de mouvement pour déplacer le premier organe (31) et le deuxième organe (32) de la position de repos à la position d'infusion, et inversement,
dans lequel l'élément indicateur (51) est une lèvre en saillie qui se développe angulairement le long d'un arc de circonférence et est reliée en rotation avec l'organe rotatif (42), le mouvement de l'élément indicateur (51) étant un mouvement angulaire.

5. L'appareil (1) selon l'une quelconque des revendications de 1 à 4, dans lequel le système de détection est en outre capable de détecter un mouvement initial depuis la position de repos et/ou de détecter la position d'infusion qui a été atteinte.

6. L'appareil (1) selon l'une quelconque des revendications de 1 à 4, dans lequel ledit détecteur (55) est un premier détecteur et ledit élément indicateur (51) est un premier élément indicateur,
dans lequel le système de détection comprend un deuxième élément indicateur (52) qui est mobile par rapport à la structure de support (20) de manière coordonnée avec l'organe mobile (31) du groupe d'infusion (12), la position du deuxième élément indicateur (52) indiquant la position de l'organe mobile (31),
le système de détection comprenant en outre un deuxième détecteur (56) qui est capable de capter la position du deuxième élément indicateur (52) et qui, sur la base de la position du deuxième élément indicateur (52), est capable de détecter un mouvement initial depuis la position de repos et/ou de détecter la position d'infusion qui a été atteinte.

7. L'appareil (1) selon la revendication 4, dans lequel ledit détecteur (55) est un premier détecteur, ledit élément indicateur (51) est un premier élément indicateur et ledit capteur optique est un premier capteur optique,
dans lequel le système de détection comprend un deuxième élément indicateur (52) qui est mobile par rapport à la structure de support (20) de manière coordonnée avec l'organe mobile (31) du groupe d'infusion (12), la position du deuxième élément indicateur (52) indiquant la position de l'organe mobile (31),
le système de détection comprenant en outre un deuxième détecteur (56) qui est capable de capter la position du deuxième élément indicateur (52) et qui, sur la base de la position du deuxième élément indicateur (52), est capable de détecter un mouvement initial depuis la position de repos et/ou de détecter la position d'infusion qui a été atteinte,
dans lequel le deuxième détecteur (56) est un deuxième capteur optique et le deuxième élément indicateur (52) est mobile dans un champ visuel du deuxième capteur optique,
le deuxième élément indicateur (52) étant une lèvre en saillie qui se développe angulairement le long d'un arc de circonférence et est reliée en rotation avec l'organe rotatif (42), le mouvement du deuxième élément indicateur (52) étant un mouvement angulaire,
dans lequel le mouvement initial depuis la position de repos correspond au deuxième élément indicateur (52) entrant dans le, ou sortant du champ visuel du deuxième capteur optique
et/ou
dans lequel la position d'infusion qui a été atteinte correspond au deuxième élément indicateur (52) sortant du, ou entrant dans le champ visuel du deuxième capteur optique.

8. L'appareil (1) selon l'une quelconque des revendications de 1 à 7, comprenant un élément presse-capsule (35) qui est associé au premier organe (31) du groupe d'infusion (12),
l'élément presse-capsule (35) ayant un siège (36), dans lequel le perforateur (37) est logé, et une surface de pression (350) destinée à venir en contact avec ladite région (93) de la capsule (9) avant que la position de perforation soit atteinte,
l'élément presse-capsule (35) étant mobile par rapport au perforateur (37) entre une première condition dans laquelle le perforateur (37) est rentré dans le siège (36) et un deuxième condition dans laquelle le perforateur (37) dépasse de ladite surface de pression (350),
dans lequel l'élément presse-capsule (35) est poussé élastiquement vers la première condition et dans lequel l'élément presse-capsule (35) est poussé vers la deuxième condition par une force de contact avec ladite région (93) de la capsule (9).

9. L'appareil (1) selon l'une quelconque des revendications de 1 à 8, dans lequel ledit perforateur (37) est associé à un circuit hydraulique de l'appareil (1) et, lors de l'utilisation, la perforation pratiquée par le perforateur (37) dans ladite région (93) de la capsule (9) est une ouverture pour l'entrée d'eau dans la capsule ou pour la sortie de boisson de la capsule.

10. Un procédé pour reconnaître une capsule (9) dans un appareil (1) selon l'une quelconque des revendications de 1 à 9, comprenant les étapes suivantes :
- déplacer le premier organe (31) et le deuxième organe (32) de la position de repos vers la position d'infusion ;
- pendant le mouvement, détecter quand la position de perforation a été atteinte ;
- une fois que la position de perforation a été atteinte, effectuer une lecture par le lecteur optique (81) ;
- effectuer la reconnaissance de la capsule sur la base de la lecture effectuée.

11. Le procédé de reconnaissance selon la revendication 10, dans lequel le lecteur optique (81) est activé avant que la position de perforation soit atteinte et dans lequel une lecture effectuée avant que la position de perforation soit atteinte est comparée avec la lecture pour la reconnaissance.
